# EUROPÄISCHE PATENTANMELDUNG

(11) **EP 1 454 819 A2**
(43) Veröffentlichungstag der Anmeldung: **08.09.2004**
(21) Anmeldenummer: 04003961.2
(22) Anmeldetag: 21.02.2004
(51) Int. Cl.: B62D 29/00

(54) **Fahrzeugkarosserie mit einer Baugruppe in Blechschalenbauweise und CFK-Kernverstärkung**

(30) Priorität: 04.03.2003 DE 10309321
(71) Anmelder: Bayerische Motoren Werke Aktiengesellschaft, 80809 München (DE)
(72) Erfinder: Hogger, Thomas, 83624 Otterfing (DE); Sielaff, Jürgen, 80999 München (DE)

(57) **Zusammenfassung**

Es ist eine Fahrzeugkarosserie mit einer B-Säule in Schalenbauweise beschrieben, die innen mit einem Rohr verstärkt ist. Das Rohr erstreckt sich über die ganze Länge der B-Säule vom Schweller bis zum Dachrahmen. Aufgabe der Erfindung ist es, eine Fahrzeugkarosserie mit einer Baugruppe in Blechschalenbauweise zu schaffen, die mit einem Verstärkungselement versteift ist, wobei die gesamte Baugruppe ein möglichst geringes Gewicht aufweist.

Erfindungsgemäß weist eine Fahrzeugkarosserie eine Baugruppe **(1)** in Blechschalenbauweise auf, wobei ein Verstärkungselement aus CFK zwischen einer Innen- und Außenschale **(5** und **6)** angeordnet ist. Durch den erfindungsgemäßen Einsatz eines Verstärkungselements lassen sich die beiden Anforderungen niedriges Gewicht und hohe Steifigkeit ideal vereinbaren.

## Beschreibung

Die Erfindung betrifft eine Fahrzeugkarosserie mit einer Baugruppe in Blechschalenbauweise.

In der nicht vorveröffentlichten DE 102 32 320.8 ist eine Fahrzeugkarosserie mit einer B-Säule in Schalenbauweise beschrieben, die innen mit einem Rohr verstärkt ist. Das Rohr erstreckt sich über die ganze Länge der B-Säule vom Schweller bis zum Dachrahmen. Die B-Säule weist aufgrund des homogenen Rohrverlaufs eine hohe Steifigkeit auf.

Ferner ist aus der DE 197 13 760 A1 eine Fahrzeugkarosserie mit einer B-Säule bekannt. Die B-Säule besteht aus einem B-Säulenblech und einem einteiligen als Guss-, Spritzguss-, Schmiede-, Press- oder Laminierteil ausgeführtes Verstärkungselement. Das Verstärkungselement ist in seiner Form an die Innenkontur des B-Säulenblechs angepasst und erstreckt sich über die gesamte Länge der B-Säule. Die Befestigung am B-Säulenblech kann durch Kleben realisiert werden. Zusätzlich können Schraubverbindungen, Nietverbindungen, Schweißungen oder andere lösbare oder nicht lösbare formschlüssige Verbindungen angewandt werden. Als mögliche Werkstoffe für das Verstärkungselement können neben Stahl Leichtmetalllegierungen aus Aluminium, Magnesium oder Titan, aber auch Kunststoffe, faserverstärkte Kunststoffe und andere Kompositwerkstoffe vorgesehen werden.

Aufgabe der Erfindung ist es, eine Fahrzeugkarosserie mit einer Baugruppe in Blechschalenbauweise zu schaffen, die mit einem Verstärkungselement versteift ist, wobei die gesamte Baugruppe ein möglichst geringes Gewicht aufweist.

Diese Aufgabe wird durch die Merkmale des Patentanspruchs 1 gelöst.

Erfindungsgemäß weist eine Fahrzeugkarosserie eine Baugruppe in Blechschalenbauweise auf, wobei ein Verstärkungselement aus CFK zwischen einer Innen- und Außenschale angeordnet ist. Die Herstellung und der Einsatz von carbonfaserverstärkten Kunststoffen (CFK) waren noch in jüngster Vergangenheit sehr teuer und deshalb deren Anwendung auf bestimmte Gebiete beschränkt. Klassische Applikationen sind Komponenten von Luft- und Raumfahrzeugen, wo das erheblich geringere Gewicht ein wichtiges Kriterium für den Einsatz dieses Werkstoff ist. Auch im Motorsport, wie beispielsweise der Formel 1, kommt aus diesen Gründen CFK als Werkstoff für ein Chassis zum Einsatz. Die hohen Materialkosten spielen dabei keine maßgebliche Rolle.

Mit dem Einsatz von CFK lassen sich erhebliche Produktverbesserungen erreichen, wie eine Erhöhung der Festigkeit, eine Erhöhung der Steifigkeit, eine starke Dämpfung mechanischer Schwingungen und die Reduzierung der Bauteilmasse.

Auch im modernen Fahrzeugkarosseriebau wird bei der Herstellung großer Baugruppen immer stärker auf Gewichtseinsparungen geachtet. Zugleich wird jedoch von diesen Baugruppen eine hohe Struktursteifigkeit und eine extreme mechanische Belastbarkeit gefordert. Durch den erfindungsgemäßen Einsatz eines Verstärkungselements aus CFK in einer Baugruppe in Blechschalenbauweise lassen sich die beiden Anforderungen niedriges Gewicht und hohe Steifigkeit ideal vereinbaren.

Ein Verstärkungselement aus CFK hat den Vorteil, dass es in der Geometrie sehr frei gestaltet werden kann. So kann das Verstärkungselement günstigerweise zumindest abschnittsweise ein geschlossenes Hohlprofil aufweisen. Geschlossene Profile weisen allgemein eine wesentlich höhere Steifigkeit als offene Profile bei gleicher Querschnittsfläche auf. Das Verstärkungselement kann bevorzugt lokal unterschiedliche Wandstärken aufweisen. Damit kann die Wandstärke an örtlich höhere Anforderungen angepasst werden, ohne dass das gesamte Verstärkungselement eine höhere Wandstärke aufweisen muss. Ferner kann das Verstärkungselement vorteilhafterweise Schotte, Streben oder Rippen aufweisen, die es zusätzlich versteifen.

Idealerweise weist das Verstärkungselement angeformte Funktionsabschnitte für Halterungen oder für die Aufnahme von Funktionselementen auf. Dadurch kann die Anzahl der erforderlichen Bauteile und damit auch der Montageumfang reduziert werden. Angeformte Funktionsabschnitte können beispielsweise vorgesehen sein für Scharnierverschraubungen, Türbremsverschraubungen, Airbagverschraubungen, Airbagrampen, Aufnahmen für einen Haltegriff, für ein Trennnetz, für eine Blende, eine Seitenwandbefestigung, einen Bassresonanzraum oder eine Halterung für elektrische Komponenten. Die Einbringung des Verstärkungselements ist sowohl im Rohbau als auch in der Endmontage des Fahrzeugs möglich.

Vorteilhafterweise ist die Baugruppe eine Fahrzeugsäule, ein Schweller, ein seitlicher Dachrahmen, eine Seitenwand oder ein Quer- oder Längsträger einer Bodenbaugruppe oder eines Vorderwagens. Dies alles sind Baugruppen, die üblicherweise in Schalenbauweise aus einer Innenschale und einer Außenschale aufgebaut sind. Aufgrund der hohen Steifigkeitsanforderungen an diese Baugruppen weisen sie häufig mindestens ein Verstärkungselement auf. Es handelt sich dabei zugleich um relativ große Baugruppen, sodass eine Gewichtsreduzierung des entsprechend großen Verstärkungselements durch den Einsatz von CFK deutlich zur Reduzierung des Gesamtgewichts der Fahrzeugkarosserie beiträgt.

Neben der Verstärkung eines Bauteils in Schalenbauweise kann auch ein Bauteil, das nur aus einer Schale besteht, mit einem solchen Verstärkungselement verstärkt werden. Die größte Gesamtsteifigkeit lässt sich aber bei einem Bauteil in geschlossener Schalenbauweise mit einer Innen- und einer Außenschale erzielen.

Eine besonders günstige Anwendung ergibt sich bei einer mit einem Verstärkungselement ausgesteiften B-Säule einer Fahrzeugkarosserie. Anhand dieser B-Säule wird die Erfindung im folgenden näher beschrieben. Die einzelnen Figuren zeigen in schematischer Darstellungsweise:
- **Fig.** 1: eine Seitenansicht einer B-Säule in Schalenbauweise mit einem Verstärkungselement aus CFK,
- **Fig.** 2: eine perspektivische Detailansicht des Verstärkungselements aus **Fig.** 1 und
- **Fig.** 3: eine Seitenansicht der B-Säule von **Fig.** 1 bei einem Seitencrash.

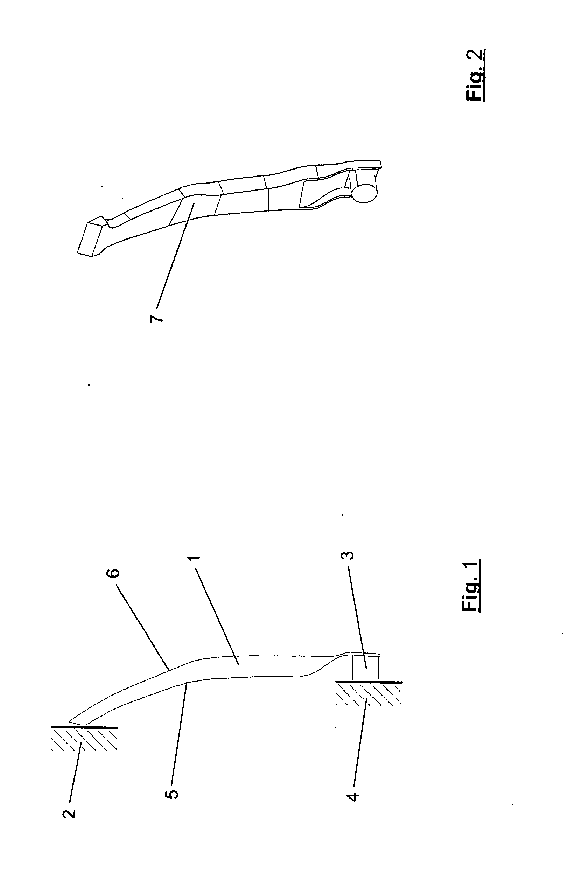

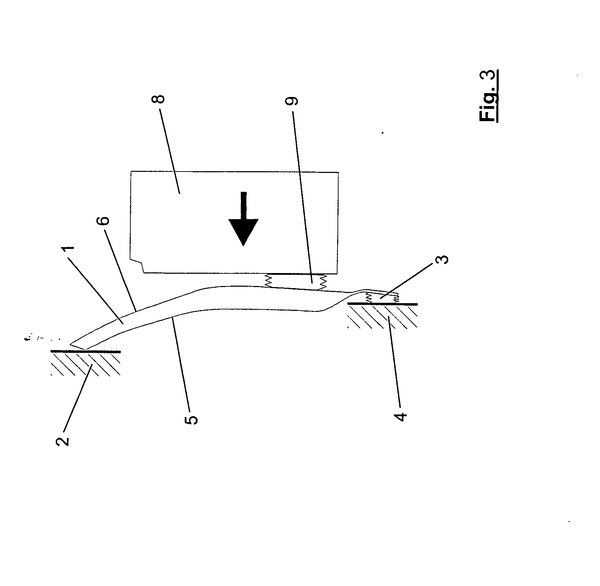

In **Fig.** 1 ist schematisch eine B-Säule 1 gezeigt, die oben an einen Dachseitenrahmen 2 und unten über ein Deformationselement 3 an einen Schweller 4 angebunden ist. Die B-Säule 1 weist eine Innenschale 5 und eine Außenschale 6 auf, die jeweils aus Stahl- oder Aluminiumblech bestehen. Zwischen Innen- und Außenschale 5 und 6 erstreckt sich über die gesamte Länge der B-Säule 1 ein Verstärkungselement 7, wie es in **Fig.** 2 dargestellt ist. Das Verstärkungselement 7 besteht aus CFK, sodass es bei einem sehr geringen Gewicht eine sehr hohe Steifigkeit aufweist. Das Verstärkungselement 7 passt formschlüssig in die Innenschale 5 und / oder Außenschale 6 der B-Säule 1. Während des Rohbaus wurde es mit der Innenschale 5 und / oder Außenschale 6 verklebt und vernietet.

Das Verstärkungselement 7 weist über die gesamte Länge ein U-förmiges Profil auf, das bis auf einen kurzen unteren Abschnitt geschlossen ist, und so ein geschlossenes Hohlprofil bildet. Entsprechend den über die Länge variierenden Steifigkeitsanforderungen an die B-Säule 1 und damit auch an das Verstärkungselement 7 variiert auch die Wandstärke des Verstärkungselements 7 lokal. Das Verstärkungselement 7 weist außerdem angeformte Funktionsabschnitte für Türscharnierverschraubungen und für eine Türbremsverschraubung auf.

Bei einem Seitencrash weist die B-Säule 1 - wie in **Fig.** 3 gezeigt - aufgrund des Verstärkungselements 7 eine hohe Steifigkeit auf. Die B-Säule 1 dringt praktisch kaum in den Fahrgastraum ein und verformt sich nahezu nur elastisch. Die in die B-Säule 1 eingeleiteten Kräfte werden unten teilweise durch das Deformationselement 3 durch eine gezielte plastische Verformung bei nahezu konstantem, hohem Kraftniveau absorbiert. So wird ein Teil der eingeleiteten Energie mit einer minimalen Eindringtiefe abgebaut. Die restlichen Kräfte werden unten in den Schweller 4 und oben in den Dachseitenrahmen 2 eingeleitet. **Fig.** 3 zeigt das verformte Deformationselement 3, nachdem ein anderes Fahrzeug 8 in Pfeilrichtung mit seiner vorderen Stoßstange 9 auf die B-Säule 1 geprallt ist.

Das Deformationselement 3 wird üblicherweise ein eigenes Bauteil sein. Es ist allerdings auch möglich, dass die anschließende Stahlstruktur, wie beispielsweise der Schweller 4 oder ein Querträger im Bereich der hinteren Sitzbank, in bekannter Form als Deformationselement dient.

## Patentansprüche

1. Fahrzeugkarosserie mit einer Baugruppe in Blechschalenbauweise mit einem Verstärkungselement zwischen einer Innen- und Außenschale, wobei das Verstärkungselement (7) aus CFK besteht.

2. Fahrzeugkarosserie nach Anspruch 1, **dadurch gekennzeichnet, dass** das Verstärkungselement (7) zumindest abschnittsweise ein geschlossenes Hohlprofil aufweist.

3. Fahrzeugkarosserie nach einem der vorhergehenden Ansprüche, **dadurch gekennzeichnet, dass** das Verstärkungselement (7) lokal unterschiedliche Wandstärken aufweist.

4. Fahrzeugkarosserie nach einem der vorhergehenden Ansprüche, **dadurch gekennzeichnet, dass** das Verstärkungselement (7) Schotte, Streben oder Rippen aufweist.

5. Fahrzeugkarosserie nach einem der vorhergehenden Ansprüche, **dadurch gekennzeichnet, dass** das Verstärkungselement (7) angeformte Funktionsabschnitte für Halterungen oder für die Aufnahme von Funktionselementen aufweist.

6. Fahrzeugkarosserie nach einem der vorhergehenden Ansprüche, **dadurch gekennzeichnet, dass** die Baugruppe eine Fahrzeugsäule (1), ein Schweller ein seitlicher Dachrahmen, eine Seitenwand oder ein Quer- oder Längsträger einer Bodenbaugruppe oder eines Vorderwagens ist.

7. Fahrzeugkarosserie nach Anspruch 6, **dadurch gekennzeichnet, dass** die Fahrzeugsäule eine B-Säule (1) ist, die über ein Deformationselement (3) unten an einen Schweller (4) angebunden ist.

8. Fahrzeugkarosserie nach Anspruch 7, **dadurch gekennzeichnet, dass** die B-Säule (1) sich bei einem Seitencrash nahezu nur elastisch verformt.
